# EUROPÄISCHE PATENTSCHRIFT

(11) **EP 4 051 457 B1**
(45) Veröffentlichungstag und Bekanntmachung des Hinweises auf die Patenterteilung: **17.07.2024**
(21) Anmeldenummer: 20789012.0
(22) Anmeldetag: 30.09.2020
(51) Int. Cl.: B25J 5/00, B25J 11/00

(54) **MOBILE PFLEGEASSISTENZVORRICHTUNG UND PATIENTENTRANSPORT-LOGISTIKSYSTEM**
MOBILE CARE ASSISTANCE APPARATUS AND PATIENT TRANSPORT LOGISTICS SYSTEM
DISPOSITIF MOBILE D'ASSISTANCE AUX SOINS ET SYSTÈME LOGISTIQUE DE TRANSPORT DE PATIENT

(30) Priorität: 30.10.2019 DE 102019216785
(43) Veröffentlichungstag der Anmeldung: 07.09.2022
(73) Patentinhaber: KUKA Deutschland GmbH, 86165 Augsburg (DE)
(72) Erfinder: KEIBEL, Andreas, 86161 Augsburg (DE); RIEDEL, Martin, 86165 Augsburg (DE)
(74) Vertreter: Oelke, Jochen
(86) Internationale Anmeldenummer: PCT/EP2020/077303
(87) Internationale Veröffentlichungsnummer: WO 2021/083597

(56) Entgegenhaltungen:
- CN-A- 110 675 950
- DE-A1- 102008 010 463
- KR-A- 20120 103 899
- US-A1- 2005 104 547
- US-A1- 2005 216 126
- US-A1- 2016 052 139
- US-B2- 9 314 928

## Beschreibung

Die Erfindung betrifft eine mobile Pflegeassistenzvorrichtung und ein Patiententransport-Logistiksystem.

Die DE 10 2008 010 463 A1 offenbart eine Pflegevorrichtung, die ein Fahrgestell und einen auf dem Fahrgestell montierten, mastförmigen Mehrgelenkroboter aufweist. Die Pflegevorrichtung ist dadurch mobil und kann zu einem zu pflegenden Patienten bewegt werden. Dabei weist das Fahrgestell einen Antrieb auf, damit die Pflegevorrichtung autonom zu dem jeweiligen Einsatzort fahren kann. Mittels dieser Pflegevorrichtung können Patienten allerdings nur in einem Bett liegend transportiert werden oder körperlich aufgehängt transportiert werden.

Die US 2005/0216126 A1 offenbart einen autonomen Serviceroboter der eingerichtet ist Lebenszeichen eines Benutzers bzw. andere Umgebungsparameter zu überwachen und im Notfall dem Benutzer zu Hilfe zu kommen bzw. diesen zu unterstützen. Der Serviceroboter weist weiter einen Roboterarm auf mit dem in der Nähe stehende Objekte gegriffen oder manipuliert werden können.

Die US 2005/0104547 A1 offenbart eine mobile Serviceplattform aufweisend einen Roboterarm zur Unterstützung von Patienten in der Pflege. Die Serviceplattform kann sich dazu mittels der Roboterarme z.B. an einen Rollstuhl koppeln und durch ein Eingabegerät gesteuert den Rollstuhl vor sich bewegen. Aufgabe der Erfindung ist es, eine mobile Pflegeassistenzvorrichtung und ein Patiententransport-Logistiksystem zu schaffen, mit dem Personen unter Beibehaltung ihrer bestehenden Eigenmobilität mitbestimmt von einem Ausgangsort an einen Zielort geleitet werden können.

Die Aufgabe wird gelöst durch eine mobile Pflegeassistenzvorrichtung, aufweisend:
- ein autonomes Fahrzeug, das einen Fahrzeugkörper aufweist, an dem mehrere Räder drehbar gelagert sind, von denen wenigstens ein Rad angetrieben ist, wobei die Räder zum Fortbewegen des autonomen Fahrzeugs auf einem Untergrund ausgebildet sind, indem die Räder mittels einer Fahrsteuervorrichtung des autonomen Fahrzeugs in ihren jeweiligen Drehrichtungen, Drehgeschwindigkeiten und/oder Lenkstellungen angesteuert sind,
- wenigstens einen an dem autonomen Fahrzeug angeordneter Roboterarm, der mehrere Glieder und mehrere Gelenke aufweist, wobei die mehreren Glieder durch Bewegungen der Gelenke gegeneinander verstellbar sind, und den Gelenken dazu jeweils elektrisch ansteuerbare Motoren des Roboterarms zugeordnet sind, so dass die Gelenke angesteuert durch eine Robotersteuerung der Pflegeassistenzvorrichtung automatisch bewegt werden können, und
- eine Ankopplungseinrichtung, die ausgebildet ist, einen von einer Person gehandhabten Rollator, einen Rollstuhl, in dem eine Person sitzt, und/oder eine gehende, sitzende oder stehende Person zu führen, um die Person mittels der mobilen Pflegeassistenzvorrichtung automatisch geleitet von einem Ausgangsort an einen Zielort zu bringen
   wobei der Roboterarm zur Bildung eines manuellen Eingabemittels für die zu führende Person mittels der Robotersteuerung in einer Nachgiebigkeitsregelung betrieben wird, so dass bei manuellem Bewegen eines oder mehrerer Glieder des Roboterarms durch die Person ein Fahrbefehl an die Robotersteuerung und/oder die Fahrsteuervorrichtung übermittelt werden kann.

Die Mobilität der Pflegeassistenzvorrichtung bedeutet, dass die Pflegeassistenzvorrichtung aufgrund ihres Charakters als autonomes Fahrzeug automatisch, d.h. selbständig ohne einen Fahrer zu benötigen sich von Ort zu Ort fortbewegen kann. Die jeweilige Bewegung bzw. der Pfad, entlang der sich die mobile Pflegeassistenzvorrichtung bewegen soll, kann durch die Fahrsteuervorrichtung gesteuert sein.

Auch wenn die erfindungsgemäße Vorrichtung als eine Pflegeassistenzvorrichtung bezeichnet ist, bedeutet dies nicht, dass die Pflegeassistenzvorrichtung ausschließlich zusammen mit zu pflegenden Personen verwendet werden kann. Vielmehr wird die erfindungsgemäße Pflegeassistenzvorrichtung auch als eine Vorrichtung verstanden, die zusammen mit Patienten Beispielsweise in einem Krankenhaus verwendet werden kann. Generell betrifft die erfindungsgemässe mobile Pflegeassistenzvorrichtung eine Vorrichtung, die eine Hilfseinrichtung für jegliche Personen bildet, die in irgendeiner Weise in ihren selbstbestimmten Bewegungen oder mentalen Leistungen zumindest vorrübergehend oder dauerhaft eingeschränkt sind. Insoweit bedürfen auch Kranke in Krankenhäusern einer Pflege im weiteren Sinne, so dass auch Patienten in einem Krankenhaus als zu pflegende Personen betrachtet werden können, jedenfalls im Sinne der Erfindung.

Das autonome Fahrzeug ist dabei ausgebildet und steuerungstechnisch eingerichtet sich selbständig, d.h. ohne einen Fahrer zu benötigen, entlang vorbestimmter Wege und Pfade fortbewegen zu können.

Der Untergrund, auf dem das autonome Fahrzeug fährt, bildet insoweit eine Fahrbahn für das autonome Fahrzeug der mobilen Pflegeassistenzvorrichtung. Der Untergrund kann innerhalb von Gebäuden und Einrichtungen also vorrangig von Gängen, Fluren und von Böden in Räumen und Aufzügen gebildet werden. Gegebenenfalls kann der Untergrund jedoch auch von Fahrbahnen außerhalb von Gebäuden gebildet werden, beispielsweise für den Fall, dass die mobile Pflegeassistenzvorrichtung automatisch von einem Gebäude in ein anderes Gebäude wechseln soll.

Um die mobile Pflegeassistenzvorrichtung entlang eines geplanten Weges oder Pfades fahren zu können, weist das autonome Fahrzeug die Fahrsteuervorrichtung auf. Die Fahrsteuervorrichtung kann ausgebildet sein, Antriebe bzw. Motoren, insbesondere elektrische Antriebe der mobilen Pflegeassistenzvorrichtung so anzusteuern, dass das autonome Fahrzeug selbständig d.h. automatisch fahrend ohne Fahrer von seinem aktuellen Ausgangsort an einen vorbestimmten Zielort gelangen kann.

Die Fahrsteuervorrichtung kann dazu ferner ausgebildet sein, die Räder des mobilen Fahrzeugs in ihren jeweiligen Drehrichtungen, Drehgeschwindigkeiten und/oder Lenkstellungen anzusteuern. Das autonome Fahrzeug kann neben den angetriebenen Rädern auch antriebslose Räder aufweisen, die ohne von der Fahrsteuervorrichtung angesteuert zu werden, nur drehbar am Fahrzeugkörper des autonome Fahrzeugs gelagert sind, ohne mit einer Antriebsvorrichtung verbunden zu sein. Das autonome Fahrzeug kann beispielsweise ein fahrerloses Transportsystem (FTS) sein.

Jedes angetriebene Rad kann eine Nabe oder eine Achse aufweisen, die mit einem Motor verbunden ist. Insoweit kann jedem einzelnen Rad ein eigener Motor zugeordnet sein. Die Steuervorrichtung treibt das jeweilige antreibbare Rad dadurch an, dass die Fahrsteuervorrichtung den jeweiligen Motor ansteuert und der jeweilige Motor das entsprechende Rad antreibt, frei laufen lässt oder abbremst.

Die Räder können Omnidirektional-Räder, insbesondere Mecanum-Räder sein. Diese können um eine Radachse an dem Fahrzeugkörper, insbesondere an einem den Fahrzeugkörper bildenden Fahrwerk des autonomen Fahrzeugs drehbar gelagert sein. Im Falle von omnidirektionalen Rädern, insbesondere Mecanum-Räder sind diese abgesehen von ihrer drehbaren Lagerung um die Radachse regelmäßig um keine sonstige Achse umorientierbar oder schwenkbar, d.h. die Räder sind nicht-lenkbare Räder. Alternativ kann das autonome Fahrzeug aber auch Lenkräder aufweisen. Um das autonome Fahrzeug mit omnidirektionalen Rädern dennoch navigieren und insbesondere um seine Gierachse drehen zu können, werden die omnidirektionalen Räder, insbesondere die Mecanum-Räder mit unterschiedlichen Drehgeschwindigkeiten betrieben. In Abhängigkeit der Drehgeschwindigkeitsdifferenzen eines Rades zu einem anderen Rad, die auch unterschiedliche Drehrichtungen umfassen können, stellt sich eine resultierende Bewegung des autonomen Fahrzeugs ein. Im speziellen kann das autonome Fahrzeug sich dann auch auf der Stelle um seine eigene Vertikalachse drehen bzw. wenden. Mit einem solchen Omnidirektionalräder-Fahrzeug sind dann auch geradlinige Bewegungen in Richtung der Drehachsen der angetriebenen Räder, also ein seitliches Versetzen des Omnidirektionalräder-Fahrzeugs möglich.

Die angetriebenen Räder sind regelmäßig um eine Radachse an dem Fahrzeugkörper, insbesondere an einem den Fahrzeugkörper bildenden Fahrwerk drehbar gelagert. Im Falle von omnidirektionalen Rädern sind diese abgesehen von ihrer drehbaren Lagerung um die Radachse regelmäßig um keine sonstige Achse umorientierbar oder schwenkbar, d.h. die Räder sind nicht-lenkbare Räder. Alternativ kann das autonome Fahrzeug aber auch Lenkräder aufweisen. Um das autonome Fahrzeug mit omnidirektionalen Rädern dennoch navigieren und insbesondere um seine Gierachse drehen zu können, werden die omnidirektionalen Räder mit unterschiedlichen Drehgeschwindigkeiten betrieben. In Abhängigkeit der Drehgeschwindigkeitsdifferenzen, die auch unterschiedliche Drehrichtungen umfassen können, eines Rades zu einem anderen Rad stellt sich eine resultierende Bewegung des autonomen Fahrzeugs ein. Im speziellen kann das autonome Fahrzeug sich dann auch auf der Stelle um seine eigene Vertikalachse drehen bzw. wenden. Mit einem Omnidirektionalräder-Fahrzeug sind auch geradlinige Bewegungen in Richtung der Drehachsen der angetriebenen Räder, also ein seitliches Versetzen des Omnidirektionalräder-Fahrzeugs möglich

An dem autonomen Fahrzeug kann ein einzelner Roboterarm befestigt sein. Es können an dem autonomen Fahrzeug gegebenenfalls jedoch auch zwei oder mehr Roboterarme befestigt sein. Jeder Roboterarm kann beispielsweise mittels einer vertikalen Linearachse d.h. einer automatisch verstellbaren Hubsäule höhenverstellbar an dem autonomen Fahrzeug gelagert sein. Der Roboterarm kann beispielsweise derjenige eines Industrieroboters sein, der insbesondere ein Knickarmroboter mit seriell aufeinander folgenden Drehgelenken, beispielsweise drei bis sieben Drehgelenken sein kann.

Die Robotersteuerung ist ausgebildet und eingerichtet, die Gelenke des Roboterarms automatisch zu verstellen, insbesondere gemäß eines Roboterprogramms und/oder eines übergeordneten Patiententransport-Logistiksystems.

Die Ankopplungseinrichtung kann als eine mechanische Kupplung ausgebildet sein, die ein mit dem autonomen Fahrzeug verbundenes Kupplungsglied und ein mit dem Kupplungsglied mechanisch zusammenwirkendes, insbesondere formschlüssig zusammenwirkendes Gegenkupplungsglied am Rollator oder Rollstuhl aufweist. In einer einfachen Ausführung kann das Kupplungsglied des autonomen Fahrzeugs bereits durch eine einfache Platte gebildet werden, auf welche ein Rahmenteil des Rollators oder des Rollstuhls lediglich gesichert aufliegt. Das Kupplungsglied kann aber auch in Art eines Greifers oder einer Verriegelungsvorrichtung ausgebildet sein, welche einen Teil des Rollators oder des Rollstuhls, beispielsweise mindestens ein Rahmenteil des Rollators oder des Rollstuhls ggf. formschlüssig umgreift. Die mechanische Kupplung ist insbesondere automatisch lösbar ausgebildet.

In gewissen Ausführungsformen, die im Folgenden noch näher erläutert sind, kann die Ankopplungseinrichtung statt als eine mechanische Kupplung in Art einer berührungslosen virtuellen Kopplung ausgebildet sein. Dies kann beispielsweise zweckmäßig sein, in den später beschriebenen Modi des freien Geleits und des haptischen Führens, oder in Fällen in denen der Rollator oder der Rollstuhl als ein eigenständig motorisch angetriebener Rollator oder Rollstuhl ausgebildet ist. In diesen Fällen kann die Ankopplungseinrichtung Sensoren aufweisen, welche die relative Position, Lage, Geschwindigkeit und/oder Beschleunigung von mobilen Pflegeassistenzvorrichtung und Rollator bzw. Rollstuhl erfassen kann und über die Fahrsteuervorrichtung des autonomen Fahrzeugs und die Antriebssteuerung des Rollators oder des Rollstuhls die Fahrgeschwindigkeit und die Lenkung sowohl des autonomen Fahrzeugs als auch des Rollators bzw. Rollstuhls aufeinander abgestimmt ansteuern kann. Insoweit kann eine virtuelle Kopplung zwischen dem autonomen Fahrzeug und dem Rollator bzw. dem Rollstuhl aufgebaut werden. Gegebenenfalls kann auch der Roboterarm der mobilen Pflegeassistenzvorrichtung ein oder mehrere manuelle Eingabemittel, wie beispielsweise Joysticks des eigenständig motorisch angetriebenen Rollators oder Rollstuhls automatisch betätigen, insbesondere bewegen. Dabei muss gemäß einer solchen virtuellen Kopplung keine mechanische Verbindung zwischen dem autonomen Fahrzeug und dem Rollator bzw. dem Rollstuhl bestehen. Eine mechanische Kopplung kann allerdings gegebenenfalls zusätzlich oder wahlweise alternativ möglich sein.

Die Person kann beispielsweise ein Bewohner einer Wohneinrichtung, eine zu pflegende Person in einem Pflegeheim oder ein Patient in einem Krankenhaus sein.

Ein Rollator wird u.a. auch als Gehwagen bezeichnet. Er ist eine fahrbare Gehhilfe. Ein Rollstuhl wird u.a. auch als Krankenfahrstuhl bezeichnet. Er ist ein Hilfsmittel für Personen, die aufgrund einer körperlichen oder geistigen Einschränkung in der Fähigkeit zum Gehen beeinträchtigt sind.

Die Ankopplungseinrichtung kann ein mit dem Rollator oder dem Rollstuhl zusammenwirkendes Kopplungsmittel aufweisen, das ausgebildet ist, den an die mobile Pflegeassistenzvorrichtung angekoppelten Rollator oder Rollstuhl in einer Anhängerbetriebsweise der Fahrt der mobilen Pflegeassistenzvorrichtung gespannartig selbstfahrend folgen zu lassen.

Das Kopplungsmittel kann insoweit eine Schleppeinrichtung bilden, bei dem die mobile Pflegeassistenzvorrichtung ein Zugfahrzeug bildet, das selbstangetrieben vorausfährt und bei dem der Rollator oder Rollstuhl einen Anhänger bildet, der dem Zugfahrzeug folgt, indem der Rollator oder Rollstuhl von der mobilen Pflegeassistenzvorrichtung gezogen wird.

In einer solchen Anhängerbetriebsweise bilden die mobile Pflegeassistenzvorrichtung und der über das Kopplungsmittel angehängte Rollator oder Rollstuhl ein Fahrzeuggespann.

Die Ankopplungseinrichtung kann eine mit dem Rollator oder dem Rollstuhl zusammenwirkende Hubeinrichtung aufweisen, die ausgebildet ist, den Rollator oder den Rollstuhl vollständig von seinem Untergrund abzuheben, so dass der Rollator oder der Rollstuhl vollständig von der mobilen Pflegeassistenzvorrichtung getragen wird.

Die Hubeinrichtung kann beispielsweise elektromotorisch angetrieben sein, so dass die Aufnahmehöhe automatisch verstellt werden kann. Die Hubeinrichtung kann eine an dem autonomen Fahrzeug in seiner Höhenlage verstellbar gelagerte Hubplattform aufweisen, auf welche beispielsweise ein Rahmenteil oder ein Rad des Rollators oder des Rollstuhls aufgenommen werden kann.

Indem die Hubeinrichtung ausgebildet ist, den Rollator oder den Rollstuhl vollständig von seinem Untergrund abzuheben, wird der Kontakt der Räder des Rollators oder des Rollstuhls zu dem Untergrund aufgehoben und der Rollator oder der Rollstuhl stützt sich vollständig an dem autonomen Fahrzeug ab und verfügt dann über keine eigene Fahrfähigkeit mehr. Der Rollator oder der Rollstuhl wird mittels der Hubeinrichtung insoweit vollständig von dem autonomen Fahrzeug getragen.

Die Ankopplungseinrichtung kann eine mit dem Rollator oder dem Rollstuhl zusammenwirkende Radpaaraufnahmeeinrichtung aufweisen, die ausgebildet ist, entweder die Vorderräder des Rollators oder des Rollstuhls auf die mobile Pflegeassistenzvorrichtung aufzunehmen, wobei die Hinterräder zum Fahren auf dem Untergrund belassen werden, oder die Hinterräder des Rollators oder des Rollstuhls auf die mobile Pflegeassistenzvorrichtung aufzunehmen, wobei die Vorderräder zum Fahren auf dem Untergrund belassen werden.

Im Allgemeinen haben Rollatoren und Rollstühle vier Räder, von denen zwei Räder ein vorderes Radpaar bilden und zwei Räder ein hinteres Radpaar bilden. Jeweils ein Paar von Rädern, d.h. ein linkes und rechtes Vorderrad bzw. ein linkes und rechtes Hinterrad werden demgemäß mittels der Radpaaraufnahmeeinrichtung angehoben und das jeweils andere Par wird in Kontakt zum Untergrund belassen. Anders ausgedrückt kann der Rollator oder der Rollstuhl von der mobilen Pflegeassistenzvorrichtung entweder von vorne aufgenommen werden oder von hinten aufgenommen werden. Hierbei kann das von der mobilen Pflegeassistenzvorrichtung aufgenommene Radpaar auf der Ankopplungseinrichtung, die beispielsweise eine Hubplattform sein kann, aufstehen, so dass das Radpaar unmittelbar angehoben wird.

Die Ankopplungseinrichtung kann eine mit dem Rollator oder dem Rollstuhl zusammenwirkende Achsaufnahmeeinrichtung aufweisen, die ausgebildet ist, die Räder einer Achse des Rollators oder des Rollstuhls anzuheben, derart, dass diese von dem Untergrund abgehoben sind und zwar in einer Anordnung von mobiler Pflegeassistenzvorrichtung und Rollator oder Rollstuhl, bei der die Gierachse der mobilen Pflegeassistenzvorrichtung mit der Achse der angehobenen Räder des Rollators oder des Rollstuhls fluchtet.

Die Achsaufnahmeeinrichtung hebt somit die Räder des Rollators oder des Rollstuhls nicht direkt an, sondern hebt den Rollator oder den Rollstuhl beispielsweise an einem Rahmenteil an, so dass das betreffende Radpaar nur mittelbar angehoben wird und dieses Radpaar dann insoweit in der Luft hängt.

Die Gierachse erstreckt sich dabei in der Hochachse d.h. in einer vertikal ausgerichteten Drehachse. Die Gierachse ist also diejenige Drehachse um die der Rollator oder der Rollstuhl sich auf der Ebene des Untergrunds dreht, um die Fahrtrichtung zu ändern.

Der Roboterarm wird zur Bildung eines manuellen Eingabemittels für die zu führende Person mittels der Robotersteuerung in einer Nachgiebigkeitsregelung betrieben, so dass bei manuellem Bewegen eines oder mehrerer Glieder des Roboterarms durch die Person ein Fahrbefehl an die Robotersteuerung und/oder die Fahrsteuervorrichtung übermittelt werden kann.

Die Geste der Person wird insoweit als eine Geste des Roboterarms manuell übertragen. Die vom Roboterarm nachvollzogene Geste wird dann einem gespeicherten Bewegungsablauf und/oder einer Änderung der Pose des Roboterarms zugeordnet und der zugehörige Bewegungsbefehl ausgeführt.

So kann ein beispielsweiser Fahrbefehl der Wunsch einer Person sein, die automatische Fahrt des autonomen Fahrzeugs zu verlangsamen. Dazu kann die von der mobilen Pflegeassistenzvorrichtung geführte Person beispielsweise den Roboterarm erfassen und entgegen der Fahrtrichtung nach hinten ziehen. Diese Geste des Nach-hinten-ziehens wird von der Robotersteuerung und/oder von der Fahrsteuervorrichtung als ein Fahrbefehl interpretiert, der lautet, die automatische Fahrt des autonomen Fahrzeugs zu verlangsamen. Eine konträre Geste bei welcher der Roboterarm von der Person manuell beispielsweise in Fahrtrichtung nach vorne gezogen wird, kann als eine Beschleunigung der momentanen Fahrgeschwindigkeit des autonomen Fahrzeugs wirken. Analoge durch Gesten gesteuerte Befehlseingaben können beispielsweise ein Ausweichen nach links oder ein Ausweichen nach rechts bedeuten, also eine entsprechende Abweichung von dem durch die automatische Programmierung vorgegebenen Pfad.

Die mobile Pflegeassistenzvorrichtung kann wenigstens einen Sensor aufweisen, der ausgebildet ist, die geführte Person hinsichtlich ihrer relativen Position und/oder Geschwindigkeit zur mobilen Pflegeassistenzvorrichtung, ihrer Haltung und/oder ihres Verhaltens zu erfassen.

Es kann ein einzelner Sensor vorgesehen sein. Es können aber auch zwei oder mehr Sensoren vorgesehen sein. Die mehreren Sensoren können in unterschiedliche Richtungen weisen. Die Sensoren können insoweit eine Richtcharakteristik aufweisen.

Der wenigstens eine Sensor kann insbesondere ein optischer Sensor sein. Der optische Sensor kann vorzugsweise eine Kamera sein.

Die Kamera kann mit einer Bildauswerteeinrichtung verbunden sein, welche eingerichtet ist, aus einem statischen Bild der Person oder aus einer bewegten Bildfolge (Videosequenz) der Person die relative Position und/oder Geschwindigkeit der Person zur mobilen Pflegeassistenzvorrichtung, ihre Haltung und/oder ihr Verhalten zu erfassen und automatisch zu bestimmen. In Abhängigkeit der bestimmten relativen Position und/oder Geschwindigkeit der Person zur mobilen Pflegeassistenzvorrichtung, ihrer Haltung und/oder ihres Verhaltens kann die Robotersteuerung den Roboterarm entsprechend angepasst bewegen und/oder die Fahrsteuervorrichtung die Fahrgeschwindigkeit und/oder den Pfad des fahrenden autonomen Fahrzeugs anpassen.

Der Roboterarm kann eine Greifeinrichtung aufweisen, die ausgebildet ist, einer in unmittelbarer Nähe der mobilen Pflegeassistenzvorrichtung gehenden Person am Arm Halt zu gewähren, so dass die Person neben der mobilen Pflegeassistenzvorrichtung gehend in ihrer Fortbewegung von dem Roboterarm gestützt wird.

Die Greifeinrichtung kann in einer einfachen Ausführungsform durch einen zangenartigen Greifer gebildet werden. Die Greifeinrichtung kann aber auch in Art einer Roboterhand ausgebildet sein. Die Roboterhand kann eine anthropomorphe Hand mit einer Mittelhand und fünf Fingern sein.

Eine Person ist dann in unmittelbarer Nähe der mobilen Pflegeassistenzvorrichtung, wenn die Person sich innerhalb des Arbeitsraumes des Roboterarms befindet, d.h. die Person von der Greifeinrichtung des Roboterarms gefasst werden kann.

Die mobile Pflegeassistenzvorrichtung kann eine Aufnahme aufweisen, die ausgebildet ist, einen Transportbehälter lösbar aufzunehmen, wobei die Aufnahme derart ausgebildet ist, dass aufgrund der örtlichen Position und Lage des Transportbehälters in seinem an der Aufnahme aufgenommenen Zustand der Roboterarm mittels eines von ihm gehandhabten Greifers Gegenstände aus dem Transportbehälter automatisch zu entnehmen und/oder Gegenstände von außerhalb in den Transportbehälter automatisch einzubringen.

Die Aufnahme kann bereits von einer vorzugsweise ebenen Plattform an dem mobilen Fahrzeug gebildet werden. Die Aufnahme kann insoweit auch funktionsvereinigend mit der Hubeinrichtung ausgebildet sein, welche Hubeinrichtung in seiner abgewandelten Funktion ausgebildet ist, den Rollator oder den Rollstuhl aufzunehmen.

Die Aufnahme kann aber auch in Art eines separaten Schrankes oder einer Vitrine ausgebildet sein, worin der Transportbehälter eingestellt werden kann. Die Aufnahme kann somit insbesondere an dem autonomen Fahrzeug angeordnet sein. Die Aufnahme kann aber auch in Art eines Hakens oder eines Rastmittels ausgebildet sein, so dass der Transportbehälter auch hängend an der mobilen Pflegeassistenzvorrichtung transportiert werden kann.

In einer besonderen Ausführungsform kann die Aufnahme an dem Roboterarm ausgebildet sein, beispielsweise an einem beliebigen Glied des Roboterarms angeordnet sein oder sogar durch die Greifeinrichtung gebildet werden, so dass der Transportbehälter insoweit in humanoider Weise durch den Roboterarm getragen werden kann. Dies kann erfolgen in analoger Weise, wie eine Person mittels ihres menschlichen Armes eine Tasche oder eine Behälter tragen würde.

Die erfindungsgemäße Aufgabe wird außerdem gelöst durch eine mobile Pflegeassistenzvorrichtung nach einem der Ansprüche 1-8 mit ein Patiententransport-Logistiksystem, aufweisend:
- ein Planungssystem umfassend einen Lageplan wenigstens eines Gebäudes, das mehrere Stationen beinhaltet, deren örtliche Lagen im Planungssystem hinterlegt sind und die über vorgegebene, im Planungssystem hinterlegte Wege erreicht werden können,
- eine Patienten-Datenbank, in der personenbezogene Daten von Personen hinterlegt sind, und
- ein Ablaufsteuerungssystem, das ausgebildet und eingerichtet ist, auf Grundlage der vom Planungssystem vorgegebenen örtliche Lagen der Stationen und der vorgegebenen Wege, sowie in Abhängigkeit der personenbezogene Daten aus der Patienten-Datenbank Navigationsdaten an eine Fahrsteuervorrichtung wenigstens einer mobilen Pflegeassistenzvorrichtung nach einem oder mehreren der beschriebenen erfindungsgemäßen Ausführungen zu senden, so dass das jeweilige autonome Fahrzeug der wenigstens einer mobilen Pflegeassistenzvorrichtung auf Basis der von dem Ablaufsteuerungssystem erhaltenen Navigationsdaten automatisch von einem Ausgangsort zu einem Zielort gefahren wird.

Auch wenn das erfindungsgemäße System als ein Patiententransport-Logistiksystem bezeichnet ist, bedeutet dies nicht, dass die das Patiententransport-Logistiksystem ausschließlich zusammen mit Patienten eines Krankenhauses verwendet werden kann. Vielmehr wird das erfindungsgemäße Patiententransport-Logistiksystem auch als ein System verstanden, das zusammen mit zu pflegenden Personen nicht nur in Krankenhäusern, sondern beispielsweise auch in einem Pflegeheim, einem Altenheim oder einer ähnlichen Einrichtung verwendet werden kann. Generell betrifft das erfindungsgemäße Patiententransport-Logistiksystem ein System, das eine Hilfssystem für jegliche Personen bildet, die in irgendeiner Weise in ihren selbstbestimmten Bewegungen oder mentalen Leistungen zumindest vorrübergehend oder dauerhaft eingeschränkt sind. Insoweit bedürfen nicht nur Kranke in Krankenhäusern einer Pflege im weiteren Sinne, sondern auch zu pflegende Personen in anderen Einrichtungen, jedenfalls im Sinne der Erfindung.

Das Planungssystem kann Rechner, d.h. Computer umfassen, die gemäß ihrer physikalischen Architektur ausgebildet sind und durch entsprechende Steuerungsprogramme, d.h. Software eingerichtet sind, die autonomen Bewegungen wenigstens einer erfindungsgemäßen mobilen Pflegeassistenzvorrichtung automatisch zu steuern.

Das Planungssystem umfasst dazu wenigstens einen Lageplan. Der Lageplan kann eine Karte bilden, in der die Positionen, Lagen, Abmessungen von Räumen, Wegen, Gängen und/oder Korridoren, sowie Behandlungsorte wenigstens einer Einrichtung, eines Krankenhauses, eines Pflegeheimes o.Ä. gespeichert sind. Der Lageplan ermöglicht es dem Planungssystem die wenigstens eine mobile Pflegeassistenzvorrichtung durch die Einrichtung, das Krankenhaus, das Pflegeheim o.Ä. zu navigieren.

Die Stationen können insoweit Räume innerhalb der Einrichtung, des Krankenhauses, des Pflegeheimes o.Ä. sein.

Die Wege können Gänge, Flure, Korridoren o.Ä. innerhalb der Einrichtung, des Krankenhauses, des Pflegeheimes sein. Die Wege können auch Pfade für die wenigstens eine mobile Pflegeassistenzvorrichtung sein, die innerhalb eines Raumes oder einer Station der Einrichtung, des Krankenhauses, des Pflegeheimes o.Ä. automatisch abzufahren sind.

Die Patienten-Datenbank kann neben persönlichen Daten, wie Namen, Geburtstag etc. weitere personenbezogene Daten der zu transportierenden Personen enthalten, insbesondere Gesundheitsdaten und Daten zu Behandlungsterminen und Behandlungsorten.

Mittels des Ablaufsteuerungssystems werden die Navigationsdaten ermittelt, die notwendig sind, um eines oder mehrere der erfindungsgemäßen mobilen Pflegeassistenzvorrichtungen automatisch zwischen Ausgangsorten und Zielorten fahren zu können. Die Navigationsdaten können neben zusätzlichen Daten insbesondere Ortsangaben und Zeitangaben umfassen. Das Ablaufsteuerungssystem kann physisch in das Planungssystem integriert sein. Alternativ kann das Ablaufsteuerungssystem physisch getrennt von dem Planungssystem ausgebildet sein.

In Krankenhäusern und Pflegeeinrichtungen wird es für die Mitarbeiter zu einer zunehmenden Belastung, sich neben ihren fachlichen Aufgaben auch noch um den Transfer von Personen d.h. den Patienten im Krankenhaus oder den pflegebedürftigen Personen in den Pflegeeinrichtungen kümmern zu müssen.

Personen, die innerhalb einer Einrichtung wie insbesondere des Gesundheitssystems, d.h. im Krankenhaus oder der Pflege, d.h. in Altenheimen oder Pflegeheimen, zu transferieren sind, werden in den bisherigen Fällen überwiegend auf einen Rollstuhl gesetzt und dieser Rollstuhl wird von einer Person manuell zum gewünschten Ziel geschoben. Sehr häufig muss diese zu transferierende Person, d.h. der Patient oder die pflegebedürftige Person, von dieser Zielposition auch wieder abgeholt werden. Dies erfordert den erneuten Arbeitseinsatz eines Mitarbeiters der Einrichtung, die den Rollstuhl wieder zurück schieben muss. Für den Hin- und Rücktransport sind im günstigsten Fall also vier Wege und im ungünstigsten Fall mitunter sechs oder sogar acht Wege abzuleisten.

Bei einer guten Einsatzplanung können die Leer-Gänge ohne den Patienten oder die pflegebedürftige Person zwar deutlich reduziert werden. Allerdings ist dies für den Betrieb oft nicht ausreichend. Vor dem Hintergrund der demografischen Entwicklung steht Krankenhäusern gegenwärtig und zukünftig immer weniger Personal zur Verfügung und darüber hinaus steigen die Personalkosten immer weiter.

Das Personal wird jedoch für höherwertigere Tätigkeiten als derartige Logistikaufgaben dringend gebraucht, so dass mittels der vorliegenden Erfindung das Ziel erreicht werden soll, die Personentransfers mindestens teilweise zu automatisieren.

Neben dem Effekt, dass Fachpersonal verloren geht, sorgt der hohe Personalaufwand für einen Personentransfer bei dem aktuellen Personalmangel außerdem für immer weiter abnehmende Qualität in der pünktlichen Bereitstellung der Personen an den Orten, an die sie transportiert werden sollen. Patienten beispielsweise kommen also immer häufiger nicht pünktlich zur Untersuchung oder gar zur Operation, wodurch der gesamte Betriebsablauf gestört wird. Verzögerungen addieren sich und pflanzen sich über den Tagesablauf fort und bauen sich immer weiter auf. Hierdurch steigert die Arbeitsbelastung der Mitarbeiter erneut. Es ist ein selbstverstärkender Effekt.

Mit entsprechenden Planungsprogrammen kann die Logistik aller Transportwege zwar optimiert werden, indem beispielsweise Leer-Gänge der Mitarbeiter mit unbesetzten Rollstühlen minimiert werden. Fehlendes Personal, das letztlich die Personen zum Ziel bringen soll, kann dadurch aber nicht ausgeglichen oder ersetzt werden. Bei spontan hohen Krankenständen des für die Patientenlogistik zur Verfügung stehenden Personals kann es dadurch sogar zu Problemen bei der Notfallversorgung kommen.

In den bekannten Abläufen in Krankenhäusern und Pflegeinrichtungen kommt es bisher nicht zum Einsatz von hausinternen Personenverkehrsmitteln. Jede Person, die bewegt d.h. von einem Ausgangsort an einen gewünschten Zielort innerhalb des Krankenhauses oder der Pflegeinrichtung gebracht werden soll, benötigt ihren eigenen persönlichen, menschlichen "Fahrer" oder zumindest einen menschlichen Begleiter. Dies resultiert in einer hohen Arbeitsleistung, die kaum noch zu bewältigen aber erforderlich ist, damit der Betrieb effizient aufrechterhalten werden kann.

In der Materiallogistik sind seit Jahrzehnten fahrerlose Transportsysteme bekannt, die auf vorgegebenen Trassen Werkstücke, Werkzeuge oder beispielsweise Behälter aller Art von Ort zu Ort bewegen können. Diese Trassen dürfen mittlerweile auch durch von Menschen frequentierte Bereiche führen, da die fahrerlosen Transportsysteme neuerdings dynamische Hindernisse, wie beispielsweise Personen, in sicherer Technik erkennen können und sicher anhalten, wenn ihnen jemand in den Weg läuft. Auf diese Technik aufbauend, wendet sich diese Erfindung dem Personentransport bzw. der Personenbegleitung in den menschlichen Lebensräumen, wie insbesondere Krankenhäusern und Pflegeeinrichtungen zu.

Die vorliegende Erfindung soll helfen, die beschriebenen Nachteile zu überwinden. Indem die Erfindung in höchst universeller und wandlungsfähiger Art den Personentransfer automatisiert und gleichzeitig mit möglichst hoher Autonomie unterstützt, kann eine mobile Pflegeassistenzvorrichtung und ein Patiententransport-Logistiksystem geschaffen werden, mit dem Personen unter möglichst weitgehender Beibehaltung ihrer bestehenden Eigenmobilität mitbestimmt von einem Ausgangsort an einen Zielort geleitet werden können, ohne dass Personal für die eigentliche Begleitung auf dem Weg zum Ziel erforderlich ist.

Dabei wird eine zu transportierende Person vom Personal allenfalls am Startpunkt in den Gebrauch der Pflegeassistenzvorrichtung bzw. in den Modus des Transfers erklärend eingeführt, d.h. eingewiesen. In analoger Weise wird die Person am Zielort in Empfang genommen und das Fahrzeug d.h. die Pflegeassistenzvorrichtung kann einen weiteren Transfer erneut beginnen.

Während des Transfers folgt das autonome Fahrzeug der Pflegeassistenzvorrichtung einem von einer Navigationssoftware bzw. von dem Patiententransport-Logistiksystem vorgegebenen Pfad und kann dabei sowohl zur Orientierung als auch zur Gewährleistung der Sicherheit von Sensoren zur Wahrnehmung der Umgebung unterstützt werden.

Ein dafür eingerichteter Algorithmus innerhalb eines zentralen Flottenmanagers kann die Aufträge optimiert und in Echtzeit auf alle zur Verfügung stehenden Pflegeassistenzvorrichtungen verteilen.

Für einen Betreiber solcher erfindungsgemäßer Pflegeassistenzvorrichtungen können sich die folgenden Vorteile einstellen.

Bei einer beispielhaften Annahme, dass jeder Bewohner einer Pflegeeinrichtung oder jeder Patient eines Krankenhauses zumindest einmal täglich zu einem Zielort gebracht werden muss, dann fallen bereits zwei Wege an, nämlich ein Hinweg und ein Rückweg. Der Zielort kann beispielsweise ein Behandlungsraum, ein Operationssaal, ein Waschraum oder ein sonstiger Aufenthaltsraum sein. Sollten diese Wege jeweils 20 Minuten in Anspruch nehmen, dann fallen bereits 40 Minuten Wegezeit je Person, d.h. Bewohner oder Patient, an. Bei beispielsweise durchschnittlich 120 Bewohnern je Einrichtung sind also 80 Stunden Wegezeiten zu veranschlagen. Die entspricht 10 Vollzeitstellen an Personalbedarf, allerdings bei Volloptimierung der Abläufe, d.h. ohne Leergänge zu benötigen. Diese Aufgabe könnte beispielsweise von ca. 10 Einheiten an erfindungsgemäßen mobilen Pflegeassistenzvorrichtungen übernommen werden.

Eine Pflegeassistenzvorrichtung verursacht geschätzt auf 10 Jahre deutlich weniger Kosten als die Hälfte einer Vollzeitstelle. Bei zukünftig weiter steigenden Löhnen wird sich dieses Verhältnis noch weiter steigern, womit sich diese Technik noch schneller bezahlt macht.

Mit den erfindungsgemäßen mobilen Pflegeassistenzvorrichtungen als automatisierte Personenbegleiter erhöht sich die Qualität der Bereitstellung, da die mobilen Pflegeassistenzvorrichtungen nur genau diese Art von Aufgaben mit höchster Priorität durchführen.

Die im Rahmen dieser Erfindung beschriebene autonom navigierende Pflegeassistenzvorrichtung ist somit ein universelles, kompaktes Gerät für verschiedene Aufgaben innerhalb einer Einrichtung. Es umfasst im Wesentlichen ein autonomes Fahrzeug, das beispielsweise omnidirektional, differentiell oder gelenkt angetrieben sein kann, und einen Roboterarm, insbesondere einen Leichtbau-Roboterarm mit vorzugsweise 3 bis 7 Freiheitsgraden, d.h. Gelenken. Der Roboterarm ist dabei direkt an dem Fahrzeug angebaut.

Die mobilen Pflegeassistenzvorrichtungen können in einer oder in mehreren der nun im Folgenden beschriebenen unterschiedlichen Betriebsarten betrieben werden. In einer speziellen Ausführungsform der Erfindung können die mobilen Pflegeassistenzvorrichtungen ausgebildet sein wahlweise in einer von zwei oder mehreren möglichen unterschiedlichen Betriebsarten betrieben zu werden.

In einer ersten grundlegenden Ausführung kann ein Ankoppeln eines Rollstuhls erfolgen, in dem die zu befördernde Person sitzt. Für diesen Zweck ist die mobile Pflegeassistenzvorrichtung mit einer Ankopplungseinrichtung versehen, die an alle gängige Rollstühle der Einrichtung ankoppeln kann. Die mobile Pflegeassistenzvorrichtung bringt die zu befördernde Person daher ähnlich einem Pfleger zum Ziel und entkoppelt sich dort vom Rollstuhl. Explizit sind hier verschiedene Varianten von Koppelverfahren möglich.

In einer ersten Variante kann der Rollstuhl von der mobilen Pflegeassistenzvorrichtung, die voraus fährt, geschleppt werden. Der Rollstuhl kann beispielsweise über eine drehbare Verbindung mit dem autonomen Fahrzeug der mobilen Pflegeassistenzvorrichtung gekoppelt werden. Die drehbaren Vorderräder des Rollstuhls können dabei gegebenenfalls weiter Bodenkontakt haben oder das Fahrzeug entkoppelt die drehbaren Vorderräder durch leichtes Anheben des Rollstuhls vom Boden.

In einer zweiten Variante kann der Rollstuhl fest mit dem autonomen Fahrzeug der mobilen Pflegeassistenzvorrichtung verbunden werden, indem das autonome Fahrzeug unter den Rollstuhl fährt und diesen durch leichtes Anheben komplett vom Boden abhebt. Das autonome Fahrzeug kann hierfür mit einer entsprechenden Hebekonstruktion ausgestattet sein, das kompatibel mit den einrichtungseigenen Rollstühlen ist.

In einer dritten Variante kann das autonome Fahrzeug der mobilen Pflegeassistenzvorrichtung den Rollstuhl von hinten unterfahren und zwar genau so weit, dass die Achse des differentiellen Antriebs des autonomen Fahrzeugs exakt mit der Hinterachse des Rollstuhls fluchtet, so dass keine kinematischen Zwangskräfte bzw. Momente bei der Rotation um den Mittelpunkt der beiden Achsen auftreten. Der Rollstuhl bleibt mit allen Rädern am Boden und das autonome Fahrzeug treibt den Rollstuhl mit seinem eigenen Antrieb an. Bei einem omnidirektionalen Antrieb des autonomen Fahrzeugs kann softwaretechnisch eine virtuelle Festachse in die Rollstuhlhinterradachse gelegt werden, sodass sich der reale Drehpunkt immer auf dieser Rollstuhlhinterradachse befindet.

In einer vierten Variante kann der Roboterarm der mobilen Pflegeassistenzvorrichtung für die zu befördernde Person als Bremse verwendet werden. Dazu legt die Person während der Fahrt ihren Unterarm auf deine dafür vorgesehene Aufnahme an dem Roboterarm. Sobald das autonome Fahrzeug sich in Bewegung setzt, prägt der Roboterarm eine Kraft in Fahrtrichtung auf den Arm der Person auf. Sofern die Person sich dem nicht durch eine deutliche Gegenkraft widersetzt, geht die Fahrt weiter. Zieht die Person den Roboterarm zurück, hält die mobile Pflegeassistenzvorrichtung vollständig an. Nach einer vorbestimmten Zeit versucht das autonome Fahrzeug der mobilen Pflegeassistenzvorrichtung erneut loszufahren und tut dies auch, sofern die Person das autonome Fahrzeug nicht durch einen Griff am Roboterarm zurückhält.

In einer fünften Variante kann der Roboterarm als eine eindimensionale Fahreingabevorrichtung beispielsweise nur für die Geschwindigkeit entlang eines fest vorgegebenen Pfades genutzt werden. Die Eingabe, d.h. beispielsweise ein Auslenken des Roboterarms aus seiner vorgegebenen Nullstellung entspricht dann einem Fahrbefehl, beispielsweise sowohl für Vorwärtsfahrt, als auch gegebenenfalls für eine Rückwärtsfahrt.

In einer sechsten Variante kann der Roboterarm als eine zweidimensionale Fahreingabevorrichtung beispielsweise sowohl für die Geschwindigkeit als auch die Richtung genutzt werden. Hiermit kann jeder Rollstuhl der Einrichtung bei Bedarf zu einem frei navigierbarem E-Rollstuhl erweitert werden.

In einer zweiten grundlegenden Ausführung kann ein Ankoppeln eines Rollators der zu befördernden Person erfolgen. Das autonome Fahrzeug der mobilen Pflegeassistenzvorrichtung kann dazu über einen Koppelmechanismus verfügen, mit dem ein Rollator angedockt werden kann. Dies kann in einer oder in mehreren der folgenden Varianten erfolgen:
In einer ersten Variante fährt das autonome Fahrzeug der mobilen Pflegeassistenzvorrichtung voraus und schleppt den Rollator hinterher, wie einen Anhänger. Das autonome Fahrzeug gibt dem Rollator hiermit seitliche Führung und Kippstabilität. Die Kopplung hat nur den Freiheitsgrad der Rotation um die Vertikale und verfügt über einen Kraftsensor in Fahrtrichtung, mit welcher die Intention der zu befördernden Person gemessen wird. Bei Aufbau einer Kraft in Fahrtrichtung setzt sich das Gespann in Bewegung. Geht die Kraft in Fahrtrichtung gegen Null, wird die Fahrt angehalten. Auf diese Weise wird gewährleistet, dass immer eine haptische Verbindung zur mitfahrenden Person gegeben ist, und das autonome Fahrzeug nicht eigenständig davon fahren kann. Gleichzeitig kann eine Überwachungskamera zum Einsatz kommen, die den Gang und den Abstand der zu befördernden Person zum Rollator überwacht. Nimmt der Abstand zu, wird automatisch dazu aufgefordert aufrechter zu gehen und näher an den Rollator heran zu kommen.

In einer zweiten Variante erfolgt eine feste Kopplung des Rollators an das autonome Fahrzeug. Der Rollator steht auf allen vier Rädern auf einem Untergrund, d.h. auf einer Fahrbahn, wie beispielsweise einem Korridor. Die Koppelstelle enthält gegebenenfalls sensitive Messmittel zur Erfassung der Fahrzeuglängskraft und gegebenenfalls auch des Giermoments.

In einer dritten Variante erfolgt die Fahrt mit angehobenem insbesondere aufgebocktem oder vom Boden entkoppeltem Rollator. Hier berührt keines der Räder oder zumindest keines der Räder der starren Hinterachse des Rollators den Boden. Der Rollator oder Teile des Rollator können hierzu angehoben werden, oder der Rollator wird, beispielsweise mittels einer Rampe, auf das Fahrzeug aufgeschoben bzw. aufgezogen.

In einer vierten Variante erfolgt die Fahrt analog der dritten Variante mit angehobenem, insbesondere teilweise aufgebocktem oder vom Boden teilweise entkoppeltem Rollator. Hier berühren jedoch nur die Räder der Hinterachse den Boden. Die Vorderräder des Rollator sind angehoben oder auf das Fahrzeug (mit Rampe) aufgeschoben bzw. aufgezogen und dort fixiert.

In einer dritten grundlegenden Ausführung erfolgt ein Transfer der zu befördernden Person durch haptisches Führen des Unterarms der Person. Hierbei geht die zu befördernde Person dicht neben dem autonomen Fahrzeug der mobilen Pflegeassistenzvorrichtung her, während sein Unterarm und/oder seine Hand und/oder sein Oberarm in der dazu vorgesehenen Aufnahme des Roboterarms der mobilen Pflegeassistenzvorrichtung ruht, welche sich vorzugsweise am distalen Ende des Roboterarms des Fahrzeugs befinden kann. Wenn es losgehen soll, baut der Roboterarm am Unterarm der Person eine Kraft in Fahrtrichtung auf, so dass die zu befördernde Person den Moment und die Richtung erkennt und losmarschieren kann. Ein Regelungsverfahren kann vorgesehen sein, das nun eine gute Geh-Geschwindigkeit aufbauen lässt, ohne die zu befördernde Person zu überfordern. Gleichzeitig wird die zu befördernde Person durch die Kamera beobachtet. Sobald die zu befördernde Person eine deutliche Gegenkraft aufbaut, gewissermaßen bremsen möchte, wird das autonome Fahrzeug wieder langsamer. Die Kameradaten können ebenfalls zur Geschwindigkeitsregelung herangezogen werden. Hierbei können wieder die oben bereits erwähnten Fahrmodi (Autonom, Teil-Autonom, manuell) unterschieden werden.

In einer vierten grundlegenden Ausführung erfolgt ein freies Geleit. Hierbei folgt die zu befördernde Person dem Fahrzeug, ohne haptische Verbindung. Elementare Komponente ist hierbei die Beobachtung durch einen Sensor, insbesondere einer Kamera der mobilen Pflegeassistenzvorrichtung. Das autonome Fahrzeug der mobilen Pflegeassistenzvorrichtung fährt dabei der Person zunächst voraus. Überschreitet der Abstand ein bestimmtes Maß wird das autonome Fahrzeug langsamer und hält schließlich an. Je dichter die zu befördernde Person folgt, desto schneller wird das autonome Fahrzeug, bis zu einer vorbestimmten Nenngeschwindigkeit. Der Sensor bzw. die Kamera kann auf einem oberen Punkt der Vertikalachse (Hubsäule an dem autonomen Fahrzeug) des Roboterarms montiert sein und mit einer Dreh-Schwenkeinheit ausgestattet sein. Bevor eine Fahrt beginnt, wird in dieser Konfiguration der Sichtbereich auf die zu befördernde Person ausgerichtet und gegebenenfalls vorab vom Personal trainiert. Von diesem Moment an verfolgt die Bildverarbeitung der zu befördernden Person ununterbrochen und berechnet Positionsdaten relativ zum autonomen Fahrzeug. Mit den Dynamikdaten des autonomen Fahrzeugs ergeben sich damit Dynamikdaten der zu befördernden Person. Basierend auf diesen Daten können die oben beschriebenen Transfermodi gesteuert und abgesichert werden. Der Modus des freien Geleits und des haptischen Führens können gegebenenfalls von der zu befördernde Person auch während des Transfers eigenständig gewechselt werden. Wenn die zu befördernde Person den Roboterarm loslässt und in Zielrichtung eigenständig weitergeht, erkennt dies die mobile Pflegeassistenzvorrichtung automatisch und fährt ohne Kontakt mit der zu befördernden Person mit. Der Modus hat sich automatisch gewechselt. Umgekehrt kann die zu befördernde Person beim freien Geleit jederzeit den Roboterarm als Stütze ergreifen und sich haptisch führen lassen.

Die mechanische Kopplung des autonomen Fahrzeugs mit dem Rollator oder dem Rollstuhl erfolgt über eine Ankopplungseinrichtung. Diese kann beispielsweise mittels kraft-sensitive Messelemente diejenigen Kräfte und Momente bestimmen, die auf den angekoppelten Rollator oder den angekoppelten Rollstuhl wirken. Diese gemessenen Kräfte und Momente können anschließend steuerungstechnisch weiterverarbeitet werden. Hierdurch können insbesondere haptische Eingaben, wie Fahrbefehle durchgeführt werden. Zudem kann eine solche Sensitivität auch genutzt werden, um Kollisionen oder Prozesskräfte, z.B. beim Koppelvorgang, zu erfassen.

In einer speziellen Ausprägungsvariante kann eine sensitive mechanische Kopplung auch über den kraft-sensitiven Roboterarm der mobilen Pflegeassistenzvorrichtung oder einen am Roboterarm befestigten Greifer erfolgen.

Die erfindungsgemäße mobile Pflegeassistenzvorrichtung kann in einer erweiterten Ausprägungsform, die über die beschriebene reine Unterstützung des Personentransfers hinausgeht, noch folgende weitere Funktionen aufweisen:
Die erfindungsgemäße mobile Pflegeassistenzvorrichtung kann zusätzlich zum Transport von Kleincontainern dienen.

Hierzu zählt insbesondere der Transport von Verbrauchsmaterialien oder Kleingütern, wie Lebensmitteln, inkl. Getränkeflaschen, Medikamenten, Dingen des täglichen Bedarfs. Für diese Zwecke kann die mobile Pflegeassistenzvorrichtung nicht nur entsprechend der oben beschriebenen Szenarien mit einem Rollator oder einem Rollstuhl verwendet werden, sondern auch mit separaten Transportbehältern gekoppelt werden. Diese Transportbehälter können auch Rollen aufweisen, vom autonomen Fahrzeug der mobilen Pflegeassistenzvorrichtung unterfahren und dann gezogen, geschoben oder getragen werden. Andererseits kann der Transportbehälter auch auf Füßen stehend vom autonomen Fahrzeug unterfahren und dann angehoben werden.

Die Transportbehälter können dabei beispielsweise mittels eines Kennzeichens, wie beispielsweise eines RFID-Tags identifiziert werden.

Die Universalität der erfindungsgemäßen mobilen Pflegeassistenzvorrichtung sorgt für eine hohe Auslastung und Wirtschaftlichkeit. Sofern beispielsweise in den Abendstunden nicht mehr viele Patienten zu bewegen sind, kann die mobile Pflegeassistenzvorrichtung andere Versorgungsaufträge übernehmen, beispielsweise um die Stationen mit Gütern zu versorgen oder Verbrauchsgüter zu entsorgen. Bei einer kleinen Baugröße ist das System auch für den Betrieb in schmalen Gängen geeignet.

Über den Transfer von Transportbehältern hinausgehend beschreibt die Erfindung auch den am autonomen Fahrzeug angeordneten Roboterarm, der beispielsweise mit einer vertikalen Hubvorrichtung ausgestattet sein kann, so dass der Roboterarm verschiedenste Aufgaben wahrnehmen kann.

Zum einen kann der Roboterarm, entsprechend der oben beschriebenen Szenarien der haptischen Befehlseingabe dienen, sowie der Kopplung mit einem Rollator oder einem Rollstuhl oder einer Person, die gehend zu einem Ziel geführt werden soll, oder in einer Sondervariante zur kraft-sensitiven Kopplung dieser Module. Zum anderen kann der Roboterarm distal mit einem Greifer ausgestattet sein, um Handhabungsaufgaben verrichten zu können. Hierzu zählt unter anderem das automatische Beladen und/oder Entladen von Transportbehältern. Für diesen Zweck können spezielle Transportbehältern vorgesehen werden, die insbesondere die folgenden Anwendungsfälle abdecken.

Ein erster Anwendungsfall ist das Ausgeben von Getränken. Es ist bekannt, das Patienten in Kliniken oder Bewohner von Altenheimen oder Pflegeheimen allgemein zu wenig trinken. Für diesen Zweck wird ein Getränke-Transportbehälter eingesetzt, der mehrere Aufnahmen für Trinkwasserflaschen oder -becher ausgelegt ist. Diese Trinkwasserflaschen oder -becher kann der Roboterarm eigenständig aus dem Getränke-Transportbehälter entnehmen und den Personen aushändigen. Dies kann auch automatisch dokumentiert werden.

Ein zweiter Anwendungsfall ist der Betrieb als Stationswagen bzw. Pflegewagen. Ein entsprechender Transportbehälter enthält alle für eine spezielle Station erforderlichen Verbrauchsgüter. Je nach Station kann der Transportbehälter anders strukturiert und beladen sein. Das autonome Fahrzeug der erfindungsgemäßen mobilen Pflegeassistenzvorrichtung bringt beispielsweise abends teilentleerte Transportbehälter zur Versorgungsstation zurück, lässt diese dort befüllen und stellt sie zurück auf die Station. Dieses Konzept kann auch als Tauschprinzip erfolgen, so dass es keine Versorgungslücke auf den Stationen durch fehlende Transportbehälter gibt.

Ein dritter Anwendungsfall ist der private Warentransport innerhalb der jeweiligen Einrichtung. Dies kann beispielsweise die Lieferung von bestellten Waren an die Person in der Einrichtung sein. Eine solche Lieferung kann beispielsweise aus einem Shop der Einrichtung erfolgen. Der Warentransport kann aber auch beispielsweise die Zustellung von persönlichen Poststücken sein.

In großen Kliniken beispielsweise existieren oft öffentliche Kleingeschäfte oder Kioske, in denen Patienten bzw. Bewohner Dinge des täglichen Lebens einkaufen können. Oft sind die Kunden jedoch gar nicht dazu in der Lage, dies selbstständig durchzuführen und sind auf das Personal oder Angehörige angewiesen, die jedoch nicht immer verfügbar sind. Gleichzeitig empfangen Bewohner auch Post, die ihnen an ihre Adresse in der Einrichtung geschickt wird. Sofern die erfindungsgemäße Begleitfunktion nicht in Anspruch genommen wird oder in Anspruch genommen werden kann, um persönlich den Einkauf zu tätigen, beispielsweise aus gesundheitlichen Gründen, kann das erfindungsgemäße autonome Fahrzeug diese Zustellung übernehmen.

Die erfindungsgemäße mobile Pflegeassistenzvorrichtung kann beide Aufgaben (Post und Einkaufen) verbinden. Gegebenenfalls können Waren auch über Online-Bestelldienste auf die Station in das Zimmer bestellt werden. Hat ein Shop eine Bestellung fertig kommissioniert, kann die erfindungsgemäße mobile Pflegeassistenzvorrichtung automatisch gerufen werden und mit der Lieferung bestückt und mit dem Lieferauftrag versehen werden. Auf die gleiche Weise kann eine zentrale Poststelle der Einrichtung die Austeilung persönlicher Post auf die Stationen veranlassen, indem auf die gleiche Weise die erfindungsgemäße mobile Pflegeassistenzvorrichtung automatisch gerufen wird. Für diesen privaten Lieferservice kann ein spezieller Transportbehälter bereitgestellt werden, der für jede Station spezifische Fächer enthält. Je nach Einrichtungsgröße sind gegebenenfalls mehrere solcher Transportbehälter erforderlich. Auf der Station entnehmen und verteilen die Mitarbeiter die Lieferungen für ihre Bewohner aus ihrer jeweiligen Stations-Schublade. Alternativ können die Lieferungen mit Hilfe des Roboterarms in dafür vorhandene Postfächer, denen beispielsweise die Zimmernummern zugeordnet sein können, verteilt werden. Alternativ kann es sogar möglich sein, dass der Roboterarm die Waren eigenständig d.h. automatisch direkt in den Zimmern entlädt.

Ein vierter Anwendungsfall ist ein automatisches Verteilen von Medikamenten. Die Medikamente können zusammengestellt in kleinen Behältern abgepackt und gegebenenfalls versiegelt sein. Mittels der erfindungsgemäßen mobilen Pflegeassistenzvorrichtung kann die personalisierte Medikamentenportion ortsgenau und zeitgenau an die Person automatisch übergeben werden, beispielsweise auf eine Ablage, wie einen Esstisch, einen Nachtisch. Alternativ kann eine automatische Übergabe, d.h. ein Aushändigen durch den Roboterarm direkt an die Person erfolgen, welche die Medikamente einzunehmen hat.

Der Transportbehälter kann in einer Ausprägungsvariante so ausgebildet sein, dass dieser nur vom Personal oder durch den Roboterarm, insbesondere einen Robotergreifer des Roboterarms zu öffnen ist und vor unautorisiertem Zugriff, beispielsweise während des Transportes geschützt ist. Dies kann insbesondere sowohl mechanisch nach dem Schlüssel-Schloss-Prinzip oder elektrisch-aktuiert, beispielsweise mittels einer Identifikation über RFID oder magnetisch passiv erfolgen.

Das autonome Fahrzeug kann mit einem kraft-sensitiven Roboterarm und einer insbesondere abnehmbaren Patientenstütze ausgestattet sein. Die Patientenstütze stützt beispielsweise den Unterarm der zu befördernden Person beim Gehen. Die Unterarmstütze kann über die Gehunterstützung hinaus den Patienten auch bei therapeutischen Bewegungsübungen führen. Damit kann das autonome Fahrzeug in einer erweiterten Ausführungsform auch dazu genutzt werden, Patienten nach einem festen Therapieplan oder auf Wunsch im eigenen Zimmer oder an einem definierten Ort aufzusuchen und mit dem Patienten präventive- oder rehabilitierende Übungen durchzuführen.

Das erfindungsgemäßes autonome Fahrzeug und der Roboterarm der mobilen Pflegeassistenzvorrichtung können darüber hinaus auch genutzt werden, um gezielt auf dem Boden liegende Gegenstände aufzuheben und einzusammeln. Dies kann autonom im Sinne eines automatischen Aufräumens erfolgen oder gezielt bedarfsgerecht beispielsweise nach Benutzeraufforderung ausgeführt werden, insbesondere ausgelöst durch eine Geste der Person. Letzteres kann beispielsweise auch dann durchgeführt werden, wenn eine im Rollstuhl befindliche Person mit dem Fahrzeug gekoppelt ist.

Das autonome Fahrzeug kann an ein übergeordnetes Steuerungs- und Planungssystem, d.h. an ein erfindungsgemäßes Patiententransport-Logistiksystem angebunden sein und beauftragt werden, personenbezogene Termine und Abläufe zu koordinieren. Aus diesen Daten können Fahraufträge und Aufgaben für einzelne autonome Fahrzeuge automatisch abgeleitet werden.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:

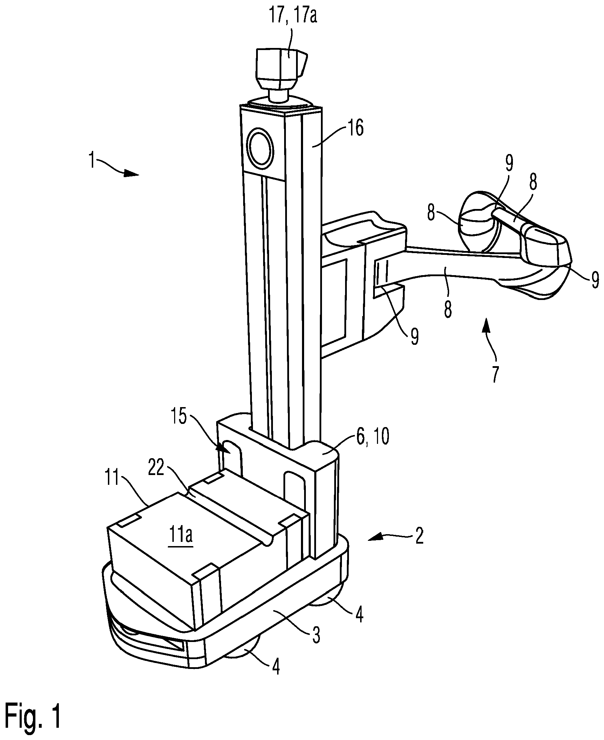

- Fig. 1: eine perspektivische Darstellung einer beispielhaften mobilen Pflegeassistenzvorrichtung in Alleinstellung,

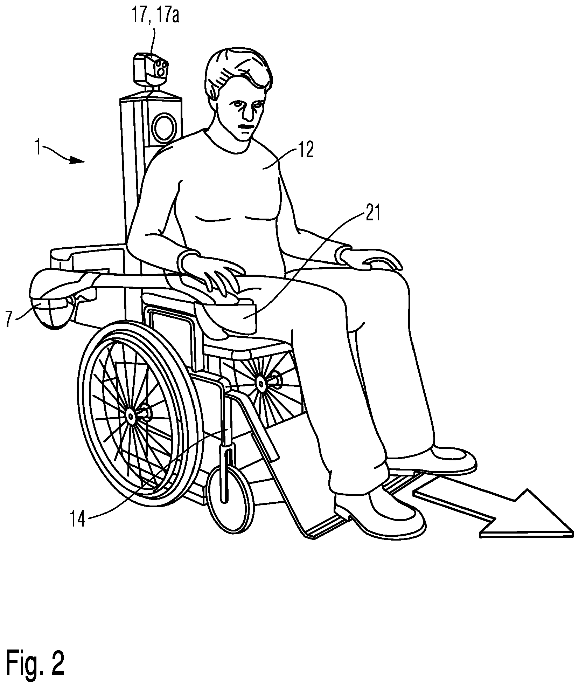

- Fig. 2: eine perspektivische Darstellung der mobilen Pflegeassistenzvorrichtung gemäß Fig.1 in einer Ankopplungssituation an einen Rollstuhl, in dem eine Person sitzt, wobei ein Roboterarm der mobilen Pflegeassistenzvorrichtung als ein Eingabemittel zum Beeinflussen der autonomen Fahrt der mobilen Pflegeassistenzvorrichtung eingerichtet ist,

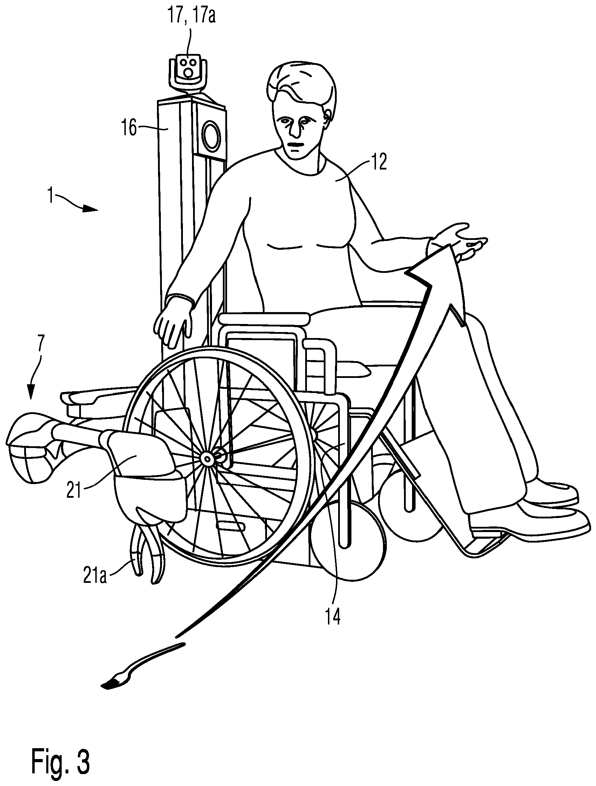

- Fig. 3: eine perspektivische Darstellung der mobilen Pflegeassistenzvorrichtung gemäß Fig.1 in einer Ankopplungssituation an einen Rollstuhl, in dem eine Person sitzt, wobei ein Roboterarm der mobilen Pflegeassistenzvorrichtung als eine Handhabungs-Hilfseinrichtung eingerichtet ist,

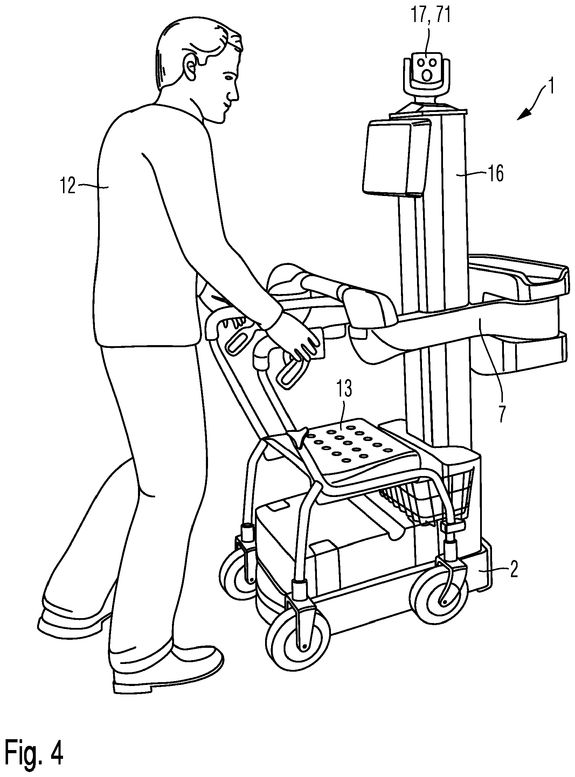

- Fig. 4: eine perspektivische Darstellung der mobilen Pflegeassistenzvorrichtung gemäß Fig.1 in einer Ankopplungssituation an einen Rollator, an dem sich eine stehende bzw. gehende Person mit den Händen abstützt, wobei der Roboterarm der mobilen Pflegeassistenzvorrichtung als eine zusätzliche Haltevorrichtung eingerichtet ist,

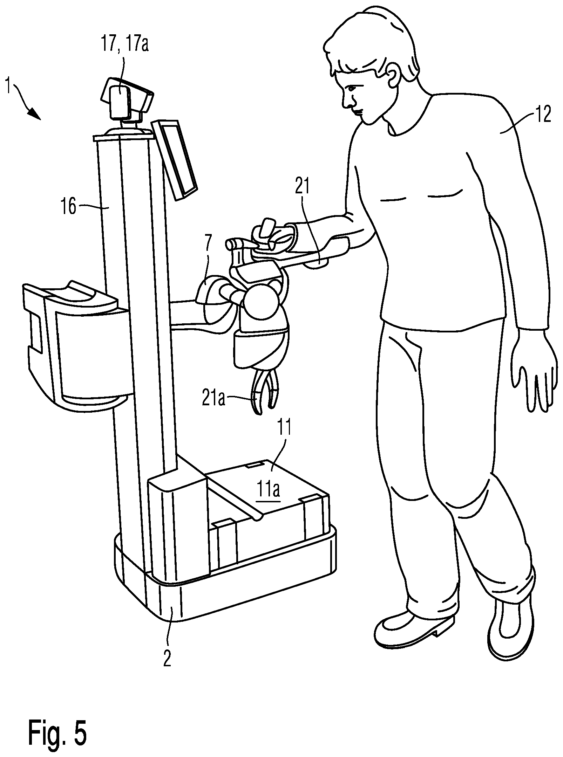

- Fig. 5: eine perspektivische Darstellung der mobilen Pflegeassistenzvorrichtung gemäß Fig.1 in einer Ankopplungssituation an einem Unterarm einer stehenden bzw. gehenden Person, wobei der Roboterarm der mobilen Pflegeassistenzvorrichtung als eine den Arm der Person unterstützende Führungsvorrichtung eingerichtet ist, und

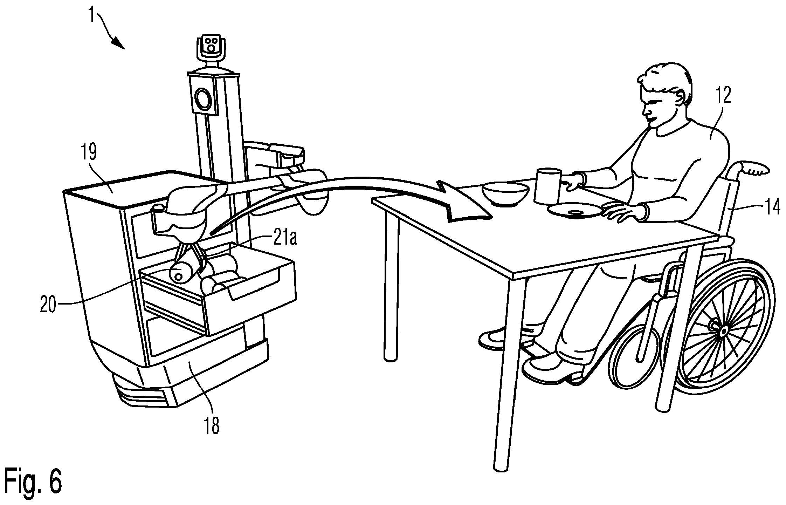

- Fig. 6: eine perspektivische Darstellung der mobilen Pflegeassistenzvorrichtung gemäß Fig.1 in einer abgewandelten Anwendung, bei der ein Transportbehälter an die mobile Pflegeassistenzvorrichtung angekoppelt ist und der Roboterarm der mobilen Pflegeassistenzvorrichtung als ein Servicearm für die Person eingerichtet ist.

In der Fig. 1 ist eine beispielhafte konkrete konstruktive Ausführungsform einer erfindungsmäßen mobilen Pflegeassistenzvorrichtung 1 in Alleinstellung dargestellt.

Die mobile Pflegeassistenzvorrichtung 1 weist ein autonomes Fahrzeug 2 auf, das einen Fahrzeugkörper 3 aufweist, an dem mehrere Räder 4 drehbar gelagert sind, von denen wenigstens ein Rad 4 angetrieben ist, wobei die Räder 4 zum Fortbewegen des autonomen Fahrzeugs 2 auf einem Untergrund 5 ausgebildet sind, indem die Räder 4 mittels einer Fahrsteuervorrichtung 6 des autonomen Fahrzeugs 2 in ihren jeweiligen Drehrichtungen, Drehgeschwindigkeiten und/oder Lenkstellungen angesteuert sind.

Die mobile Pflegeassistenzvorrichtung 1 gemäß Fig. 1 weist außerdem einen an dem autonomen Fahrzeug 2 angeordneter Roboterarm 7 auf, der mehrere Glieder 8 und mehrere Gelenke 9 aufweist, wobei die mehreren Glieder 8 durch Bewegungen der Gelenke 9 gegeneinander verstellbar sind, und den Gelenken 9 dazu jeweils elektrisch ansteuerbare Motoren des Roboterarms 7 zugeordnet sind, so dass die Gelenke 9 angesteuert durch eine Robotersteuerung 10 der mobilen Pflegeassistenzvorrichtung 1 automatisch bewegt werden können.

Im Falle des in Fig.1 dargestellten Ausführungsbeispiels sind die Fahrsteuervorrichtung 6 und die Robotersteuerung 10 in einer gemeinsamen Steuereinheit integriert.

Die mobile Pflegeassistenzvorrichtung 1 gemäß Fig. 1 weist erfindungsgemäß eine Ankopplungseinrichtung 11 auf, die ausgebildet ist, einen von einer Person 12 gehandhabten Rollator 13 (Fig. 4), einen Rollstuhl 14 (Fig. 2, Fig. 3, Fig. 6), in dem eine Person 12 sitzt, und/oder eine gehende (Fig. 5), sitzende (Fig. 6) oder stehende (Fig. 4) Person 12 zu führen, um die Person 12 mittels der mobilen Pflegeassistenzvorrichtung 1 automatisch geleitet von einem Ausgangsort an einen Zielort zu bringen.

Die Ankopplungseinrichtung 11 weist ein mit dem Rollator 13 oder dem Rollstuhl 14 zusammenwirkendes Kopplungsmittel 11a auf, das ausgebildet ist, den an die mobile Pflegeassistenzvorrichtung 1 angekoppelten Rollator 13 oder Rollstuhl 14 in einer Anhängerbetriebsweise (Fig. 4) der Fahrt der mobilen Pflegeassistenzvorrichtung 1 gespannartig selbstfahrend folgen zu lassen.

Dazu weist die Ankopplungseinrichtung 11 eine mit dem Rollator 13 oder dem Rollstuhl 14 zusammenwirkende Hubeinrichtung 15 auf, die ausgebildet ist, den Rollator 13 oder den Rollstuhl 14 vollständig von seinem Untergrund abzuheben, so dass der Rollator 13 oder der Rollstuhl 14 vollständig von der mobilen Pflegeassistenzvorrichtung 1 getragen wird.

Im Falle des vorliegenden dargestellten Ausführungsbeispiel wird die Hubeinrichtung 15 von einem Hubantrieb gebildet, welcher ausgebildet ist, das als Hubplattform ausgebildete Kopplungsmittel 11a gegenüber einem Fahrwerk des autonomen Fahrzeugs 2 anzuheben und/oder abzusenken. Das Kopplungsmittel 11a umfasst dazu einen Rinne 22 in der Oberfläche der Hubplattform, in welche beispielweise eine Rohrstrebe des Rollators 13 oder des Rollstuhls 14 formschlüssig aufgenommen ist.

Die dargestellte Ankopplungseinrichtung 11 ist somit im Falle des vorliegenden Ausführungsbeispiels auch eine mit dem Rollator 13 oder dem Rollstuhl 14 zusammenwirkende Radpaaraufnahmeeinrichtung, die ausgebildet ist, entweder die Vorderräder des Rollators 13 oder des Rollstuhls 14 auf die mobile Pflegeassistenzvorrichtung 1 aufzunehmen, wobei die Hinterräder zum Fahren auf dem Untergrund 5 belassen werden, oder die Hinterräder des Rollators 13 oder des Rollstuhls 14 auf die mobile Pflegeassistenzvorrichtung 1 aufzunehmen, wobei die Vorderräder zum Fahren auf dem Untergrund 5 belassen werden.

Die dargestellte Ankopplungseinrichtung 11 bildet außerdem eine mit dem Rollator 13 oder dem Rollstuhl 14 zusammenwirkende Achsaufnahmeeinrichtung, die ausgebildet ist, die Räder einer Achse des Rollators 13 oder des Rollstuhls 14 anzuheben, derart, dass diese von dem Untergrund 5 abgehoben sind und zwar in einer Anordnung von mobiler Pflegeassistenzvorrichtung 1 und Rollator 13 oder Rollstuhl 14, bei der die Gierachse der mobilen Pflegeassistenzvorrichtung 1 mit der Achse der angehobenen Räder des Rollators 13 oder des Rollstuhls 14 fluchtet.

Der Roboterarm 7 ist an einer Hubsäule 16 automatisch höhenverstellbar gelagert. Ein Sensor 17 bzw. eine Kamera 17a ist im Falle des dargestellten Ausführungsbeispiels auf einem oberen Ende der Hubsäule 16 an dem autonomen Fahrzeug 2 montiert. Der Sensor 17 bzw. die Kamera 17a kann mit einer Dreh-Schwenkeinheit ausgestattet sein.

Der Sensor 17 bzw. die Kamera 17a ist ausgebildet, die geführte Person 12 hinsichtlich ihrer relativen Position und/oder Geschwindigkeit zur mobilen Pflegeassistenzvorrichtung 1, ihrer Haltung und/oder ihres Verhaltens zu erfassen.

Der Roboterarm 7 ist im Falle des dargestellten Ausführungsbeispiels zur Bildung eines manuellen Eingabemittels für die zu führende Person 12 mittels der Robotersteuerung 10 in einer Nachgiebigkeitsregelung betrieben, so dass bei manuellem Bewegen eines oder mehrerer Glieder 8 des Roboterarms 7 durch die Person 12 ein Fahrbefehl an die Robotersteuerung 10 und/oder die Fahrsteuervorrichtung 6 übermittelt werden kann.

Wie insbesondere in Fig. 5 aufgezeigt ist, kann der Roboterarm 7 wenigstens eine Greifeinrichtung 21, 21a aufweisen, die ausgebildet ist, einer in unmittelbarer Nähe der mobilen Pflegeassistenzvorrichtung 1 gehenden Person 12 am Arm Halt zu gewähren, so dass die Person 12 neben der mobilen Pflegeassistenzvorrichtung 1 gehend in ihrer Fortbewegung von dem Roboterarm 7 gestützt wird. Die Greifeinrichtung 21a kann ausgebildet und eingerichtet sein, am Boden liegende Gegenstände, die beispielsweise heruntergefallen sind, automatisch aufzuheben.

In der Fig. 6 ist aufgezeigt, wie die mobile Pflegeassistenzvorrichtung 1 eine Aufnahme 18 aufweisen kann, die ausgebildet ist, einen Transportbehälter 19 lösbar aufzunehmen, wobei die Aufnahme 18 derart ausgebildet ist, dass aufgrund der örtlichen Position und Lage des Transportbehälters 19 in seinem an der Aufnahme 18 aufgenommenen Zustand der Roboterarm 7, wie in Fig. 6 dargestellt ist, mittels eines von ihm gehandhabten Greifers 21a einen Gegenstand 20 aus dem Transportbehälter 19 automatisch entnehmen und/oder den Gegenstand 20 von außerhalb in den Transportbehälter 19 automatisch einbringen kann.

## Patentansprüche

1. Mobile Pflegeassistenzvorrichtung (1), aufweisend:
- ein autonomes Fahrzeug (2), das einen Fahrzeugkörper (3) aufweist, an dem mehrere Räder (4) drehbar gelagert sind, von denen wenigstens ein Rad (4) angetrieben ist, wobei die Räder (4) zum Fortbewegen des autonomen Fahrzeugs (2) auf einem Untergrund (5) ausgebildet sind, indem die Räder (4) mittels einer Fahrsteuervorrichtung (6) des autonomen Fahrzeugs (2) in ihren jeweiligen Drehrichtungen, Drehgeschwindigkeiten und/oder Lenkstellungen angesteuert sind,
- wenigstens einen an dem autonomen Fahrzeug (2) angeordneter Roboterarm (7), der mehrere Glieder (8) und mehrere Gelenke (9) aufweist, wobei die mehreren Glieder (8) durch Bewegungen der Gelenke (9) gegeneinander verstellbar sind, und den Gelenken (9) dazu jeweils elektrisch ansteuerbare Motoren des Roboterarms (7) zugeordnet sind, so dass die Gelenke (9) angesteuert durch eine Robotersteuerung (10) der Pflegeassistenzvorrichtung (1) automatisch bewegt werden können, und
- eine Ankopplungseinrichtung (11), die ausgebildet ist, einen von einer Person (12) gehandhabten Rollator (13), einen Rollstuhl (14), in dem eine Person (12) sitzt, und/oder eine gehende, sitzende oder stehende Person (12) zu führen, um die Person (12) mittels der mobilen Pflegeassistenzvorrichtung (1) automatisch geleitet von einem Ausgangsort an einen Zielort zu bringen
**dadurch gekennzeichnet, dass** der Roboterarm (7) zur Bildung eines manuellen Eingabemittels für die zu führende Person (12) mittels der Robotersteuerung (10) in einer Nachgiebigkeitsregelung betrieben wird, so dass bei manuellem Bewegen eines oder mehrerer Glieder (8) des Roboterarms (7) durch die Person (12) ein Fahrbefehl an die Robotersteuerung (10) und die Fahrsteuervorrichtung (6) übermittelt werden kann.

2. Mobile Pflegeassistenzvorrichtung nach Anspruch 1, **dadurch gekennzeichnet, dass** die Ankopplungseinrichtung (11) ein mit dem Rollator (13) oder dem Rollstuhl (14) zusammenwirkendes Kopplungsmittel (11a) aufweist, das ausgebildet ist, den an die mobile Pflegeassistenzvorrichtung (19) angekoppelten Rollator (13) oder Rollstuhl (14) in einer Anhängerbetriebsweise der Fahrt der mobilen Pflegeassistenzvorrichtung (1) gespannartig selbstfahrend folgen zu lassen.

3. Mobile Pflegeassistenzvorrichtung nach Anspruch 1 oder 2, **dadurch gekennzeichnet, dass** die Ankopplungseinrichtung (11) eine mit dem Rollator (13) oder dem Rollstuhl (14) zusammenwirkende Hubeinrichtung (15) aufweist, die ausgebildet ist, den Rollator (13) oder den Rollstuhl (14) vollständig von seinem Untergrund (5) abzuheben, so dass der Rollator (13) oder der Rollstuhl (14) vollständig von der mobilen Pflegeassistenzvorrichtung (1) getragen wird.

4. Mobile Pflegeassistenzvorrichtung nach einem der Ansprüche 1 bis 3, **dadurch gekennzeichnet, dass** die Ankopplungseinrichtung (11) eine mit dem Rollator (13) oder dem Rollstuhl (14) zusammenwirkende Radpaaraufnahmeeinrichtung aufweist, die ausgebildet ist, entweder die Vorderräder des Rollators (13) oder des Rollstuhls (14) auf die mobile Pflegeassistenzvorrichtung (1) aufzunehmen, wobei die Hinterräder zum Fahren auf dem Untergrund (5) belassen werden, oder die Hinterräder des Rollators (13) oder des Rollstuhls (14) auf die mobile Pflegeassistenzvorrichtung (1) aufzunehmen, wobei die Vorderräder zum Fahren auf dem Untergrund (5) belassen werden.

5. Mobile Pflegeassistenzvorrichtung nach einem der Ansprüche 1 bis 4, **dadurch gekennzeichnet, dass** die Ankopplungseinrichtung (11) eine mit dem Rollator (13) oder dem Rollstuhl (14) zusammenwirkende Achsaufnahmeeinrichtung aufweist, die ausgebildet ist, die Räder einer Achse des Rollators (13) oder des Rollstuhls (14) anzuheben, derart, dass diese von dem Untergrund (5) abgehoben sind und zwar in einer Anordnung von mobiler Pflegeassistenzvorrichtung (1) und Rollator (13) oder Rollstuhl (14), bei der die Gierachse der mobilen Pflegeassistenzvorrichtung (1) mit der Achse der angehobenen Räder des Rollators (13) oder des Rollstuhls (14) fluchtet.

6. Mobile Pflegeassistenzvorrichtung nach einem der Ansprüche 1 bis 5, **dadurch gekennzeichnet, dass** die mobile Pflegeassistenzvorrichtung (1) wenigstens einen Sensor (17) aufweist, der ausgebildet ist, die geführte Person (12) hinsichtlich ihrer relativen Position und/oder Geschwindigkeit zur mobilen Pflegeassistenzvorrichtung (1), ihrer Haltung und/oder ihres Verhaltens zu erfassen.

7. Mobile Pflegeassistenzvorrichtung nach einem der Ansprüche 1 bis 6, **dadurch gekennzeichnet, dass** der Roboterarm (7) eine Greifeinrichtung (21, 21a) aufweist, die ausgebildet ist, einer in unmittelbarer Nähe der mobilen Pflegeassistenzvorrichtung (1) gehenden Person (12) am Arm Halt zu gewähren, so dass die Person (12) neben der mobilen Pflegeassistenzvorrichtung (1) gehend in ihrer Fortbewegung von dem Roboterarm (7) gestützt wird.

8. Mobile Pflegeassistenzvorrichtung nach einem der Ansprüche 1 bis 7, **dadurch gekennzeichnet, dass** die mobile Pflegeassistenzvorrichtung (1) eine Aufnahme (18) aufweist, die ausgebildet ist, einen Transportbehälter (19) lösbar aufzunehmen, wobei die Aufnahme (18) derart ausgebildet ist, dass aufgrund der örtlichen Position und Lage des Transportbehälters (19) in seinem an der Aufnahme (18) aufgenommenen Zustand der Roboterarm (7) mittels eines von ihm gehandhabten Greifers (21, 21a) Gegenstände (20) aus dem Transportbehälter (19) automatisch zu entnehmen und/oder Gegenstände (20) von außerhalb in den Transportbehälter (19) automatisch einzubringen sind.

9. Mobile Pflegeassitenzvorrichtung nach einem der Ansprüche 1-8 mit einem Patiententransport-Logistiksystem, aufweisend:
- ein Planungssystem umfassend einen Lageplan wenigstens eines Gebäudes, das mehrere Stationen beinhaltet, deren örtliche Lagen im Planungssystem hinterlegt sind und die über vorgegebene, im Planungssystem hinterlegte Wege erreicht werden können,
- eine Patienten-Datenbank, in der personenbezogene Daten von Personen (12) hinterlegt sind, und
- ein Ablaufsteuerungssystem, das ausgebildet und eingerichtet ist, auf Grundlage der vom Planungssystem vorgegebenen örtliche Lagen der Stationen und der vorgegebenen Wege, sowie in Abhängigkeit der personenbezogene Daten aus der Patienten-Datenbank Navigationsdaten an eine Fahrsteuervorrichtung wenigstens einer mobilen Pflegeassistenzvorrichtung (1) nach einem der Ansprüche 1 bis 8 zu senden, so dass das jeweilige autonome Fahrzeug (2) der wenigstens einer mobilen Pflegeassistenzvorrichtung (1) auf Basis der von dem Ablaufsteuerungssystem erhaltenen Navigationsdaten automatisch von einem Ausgangsort zu einem Zielort gefahren wird,
wobei der Roboterarm (7) zur Bildung eines manuellen Eingabemittels für die zu führende Person (12) mittels der Robotersteuerung (10) in einer Nachgiebigkeitsregelung betrieben wird, so dass bei manuellem Bewegen eines oder mehrerer Glieder (8) des Roboterarms (7) durch die Person (12) ein Fahrbefehl an die Robotersteuerung (10) und/oder die Fahrsteuervorrichtung (6) übermittelt werden kann.

## Claims

1. Mobile care assistance apparatus (1), comprising:
- an autonomous vehicle (2), which has a vehicle body (3) on which a plurality of wheels (4) are rotatably mounted, of which at least one wheel (4) is driven, wherein the wheels (4) are designed for moving the autonomous vehicle (2) on an underlying surface (5), in particular the wheels (4) are controlled in their respective directions of rotation, rotational speeds and/or steering positions by means of a drive control apparatus (6) of the autonomous vehicle (2),
- at least one robot arm (7), which is arranged on the autonomous vehicle (2) and has a plurality of links (8) and a plurality of joints (9), wherein the plurality of links (8) are adjustable in relation to one another by movements of the joints (9), and, for this purpose, the joints (9) are each assigned electrically activatable motors of the robot arm (7) such that the joints (9), activated by a robot control system (10) of the care assistance apparatus (1), can be automatically moved, and
- a coupling device (11), which is designed to guide a rollator (13) handled by a person (12), a wheelchair (14), on which a person (12) is sitting, and/or a walking, sitting or standing person (12) in order to bring the person (12) from a starting location to a destination in a manner automatically guided by means of the mobile care assistance device (1),
**characterized in that**, in order to form a manual input means for the person (12) being guided, the robot arm (7) is operated by means of the robot control system (10) under compliance control such that, in the event of manual movement of one or more links (8) of the robot arm (7) by the person (12), a drive command can be transmitted to the robot control system (10) and to the drive control apparatus (6).

2. Mobile care assistance apparatus according to Claim 1, **characterized in that** the coupling device (11) has a coupling means (11a) which interacts with the rollator (13) or the wheelchair (14) and is designed to allow the rollator (13) or wheelchair (14), which is coupled to the mobile care assistance apparatus (19), in a trailer operating mode, to follow the travel of the mobile care assistance apparatus (1) in a self-propelled tandem-like manner.

3. Mobile care assistance apparatus according to Claim 1 or 2, **characterized in that** the coupling device (11) has a lifting device (15) which interacts with the rollator (13) or the wheelchair (14) and is designed to completely lift the rollator (13) of the wheelchair (14) from its underlying surface (5) such that the rollator (13) or the wheelchair (14) is completely carried by the mobile care assistance apparatus (1).

4. Mobile care assistance apparatus according to one of Claims 1 to 3, **characterized in that** the coupling device (11) has a wheel-pair receiving device which interacts with the rollator (13) or the wheelchair (14) and is designed to receive either the front wheels of the rollator (13) or of the wheelchair (14) on the mobile care assistance apparatus (1), with the rear wheels being left to travel on the underlying surface (5), or to receive the rear wheels of the rollator (13) or of the wheelchair (14) on the mobile care assistance apparatus (1), with the front wheels being left to travel on the underlying surface (5).

5. Mobile care assistance apparatus according to one of Claims 1 to 4, **characterized in that** the coupling device (11) has an axle-receiving device which interacts with the rollator (13) or the wheelchair (14) and is designed to raise the wheels of an axle of the rollator (13) or of the wheelchair (14) in such a manner that said wheels are lifted from the underlying surface (5), specifically in an arrangement of the mobile care assistance apparatus (1) and rollator (13) or wheelchair (14), in which the yaw axis of the mobile care assistance apparatus (1) aligns with the axle of the raised wheels of the rollator (13) or of the wheelchair (14).

6. Mobile care assistance apparatus according to one of Claims 1 to 5, **characterized in that** the mobile care assistance apparatus (1) has at least one sensor (17) which is designed to detect the guided person (12) in respect of their relative position and/or speed with respect to the mobile care assistance apparatus (1), their posture and/or their behaviour.

7. Mobile care assistance apparatus according to one of Claims 1 to 6, **characterized in that** the robot arm (7) has a gripping device (21, 21a) which is designed to ensure that a person (12) walking in the immediate vicinity of the care assistance apparatus (1) is supported by the arm such that the person (12) walking next to the mobile care assistance apparatus (1) is supported in their movement by the robot arm (7).

8. Mobile care assistance apparatus according to one of Claims 1 to 7, **characterized in that** the mobile care assistance apparatus (1) has a receptacle (18) which is designed to releasably receive a transport container (19), wherein the receptacle (18) is designed in such a manner that, on the basis of the local position and site of the transport container (19) in its state received at the receptacle (18), the robot arm (7), using a gripper (21, 21a) that it handles, can automatically remove objects (20) from the transport container (19) and/or can automatically introduce objects (20) into the transport container (19) from the outside.

9. Mobile care assistance apparatus according to one of Claims 1-8 having a patient transport logistics system, comprising:
- a planning system comprising a map of at least one building which contains a plurality of stations, the locations of which are stored in the planning system and which can be reached via predetermined paths stored in the planning system,
- a patient database in which person-related data of people (12) are stored,
- a sequence control system which is designed and configured, on the basis of the locations of the stations, which are predetermined by the planning system, and the predetermined paths, and depending on the person-related data from the patient database, to transmit navigation data to a drive control apparatus of at least one mobile care assistance apparatus (1) according to one of Claims 1 to 8 such that the respective autonomous vehicle (2) of the at least one mobile care assistance apparatus (1) is automatically moved from a starting location to a destination on the basis of the navigation data received from the sequence control system,
wherein, in order to form a manual input means for the person (12) being guided, the robot arm (7) is operated by means of the robot control system (10) under compliance control such that, in the event of manual movement of one or more links (8) of the robot arm (7) by the person (12), a drive command can be transmitted to the robot control system (10) and/or to the drive control apparatus (6).

## Revendications

1. Dispositif mobile d'assistance aux soins (1), présentant :
- un véhicule autonome (2) qui présente un corps de véhicule (3) sur lequel plusieurs roues (4) sont montées en rotation dont au moins une roue (4) est entraînée, dans lequel les roues (4) sont réalisées pour faire avancer le véhicule autonome (2) sur un sol (5) en ce que les roues (4) sont pilotées au moyen d'un dispositif de commande de propulsion (6) du véhicule autonome (2) au niveau de leurs directions de rotation, de leurs vitesses de rotation et/ou de leurs positions de braquage respectives,
- au moins un bras de robot (7) disposé sur le véhicule autonome (2) et qui présente plusieurs membres (8) et plusieurs articulations (9), dans lequel les plusieurs membres (8) peuvent être réglés les uns par rapport aux autres par des mouvements des articulations (9), et à cet effet des moteurs du bras de robot (7), pouvant respectivement être commandés électriquement, sont associés aux articulations (9) de sorte que les articulations (9) peuvent être déplacées automatiquement en étant pilotées par une commande de robot (10) du dispositif d'assistance aux soins (1), et
- un équipement d'accouplement (11) qui est réalisé pour guider un déambulateur (13) manipulé par une personne (12), une chaise roulante (14) sur laquelle une personne (12) est assise, et/ou une personne (12) qui marche, est assise ou est debout, afin d'amener la personne (12) d'un point de départ à un point de destination au moyen du dispositif mobile d'assistance aux soins (1) par un guidage automatique,
**caractérisé en ce que**, pour former un moyen d'entrée manuel pour la personne (12) à guider, le bras de robot (7) fonctionne avec un contrôle de la souplesse au moyen de la commande de robot (10) de sorte que dans le cas d'un déplacement manuel d'un ou de plusieurs membres (8) du bras de robot (7) par la personne (12), une commande de propulsion peut être transmise à la commande de robot (10) et au dispositif de commande de propulsion (6).

2. Dispositif mobile d'assistance aux soins selon la revendication 1, **caractérisé en ce que** l'équipement d'accouplement (11) présente un moyen d'accouplement (11a) coopérant avec le déambulateur (13) ou la chaise roulante (14), et qui est réalisé pour faire que le déambulateur (13) ou la chaise roulante (14) accouplé(e) au dispositif mobile d'assistance aux soins (19) suive de façon autonome l'avance du dispositif mobile d'assistance aux soins (1) à la manière d'un attelage dans un mode de fonctionnement de remorque.

3. Dispositif mobile d'assistance aux soins selon la revendication 1 ou 2, **caractérisé en ce que** l'équipement d'accouplement (11) présente un équipement de levage (15) coopérant avec le déambulateur (13) ou la chaise roulante (14), et qui est réalisé pour soulever entièrement le déambulateur (13) ou la chaise roulante du sol (5) de sorte que le déambulateur (13) ou la chaise roulante (14) soit porté(e) entièrement par le dispositif mobile d'assistance aux soins (1).

4. Dispositif mobile d'assistance aux soins selon l'une quelconque des revendications 1 à 3, **caractérisé en ce que** l'équipement d'accouplement (11) présente un équipement de réception de paire de roues coopérant avec le déambulateur (13) ou la chaise roulante (14), et qui est réalisé soit pour recevoir les roues avant du déambulateur (13) ou de la chaise roulante (14) sur le dispositif mobile d'assistance aux soins (1), les roues arrière restant au sol (5) pour avancer, soit pour recevoir les roues arrière du déambulateur (13) ou de la chaise roulante (14) sur le dispositif mobile d'assistance aux soins (1), les roues avant restant au sol (5) pour avancer.

5. Dispositif mobile d'assistance aux soins selon l'une quelconque des revendications 1 à 4, **caractérisé en ce que** l'équipement d'accouplement (11) présente un équipement de réception d'essieu coopérant avec le déambulateur (13) ou la chaise roulante (14), et qui est réalisé pour soulever les roues d'un essieu du déambulateur (13) ou de la chaise roulante (14) de telle sorte qu'elles soient soulevées du sol (5), notamment dans une disposition du dispositif mobile d'assistance aux soins (1) et du déambulateur (13) ou de la chaise roulante (14) dans laquelle l'axe de lacet du dispositif mobile d'assistance aux soins (1) est aligné sur l'essieu des roues soulevées du déambulateur (13) ou de la chaise roulante (14).

6. Dispositif mobile d'assistance aux soins selon l'une quelconque des revendications 1 à 5, **caractérisé en ce que** le dispositif mobile d'assistance aux soins (1) présente au moins un capteur (17) qui est réalisé pour détecter la personne guidée (12) en ce qui concerne sa position et/ou sa vitesse relative(s) par rapport au dispositif mobile d'assistance aux soins (1), sa posture et/ou son comportement.

7. Dispositif mobile d'assistance aux soins selon l'une quelconque des revendications 1 à 6, **caractérisé en ce que** le bras de robot (7) présente un équipement de préhension (21, 21a) qui est réalisé pour soutenir le bras d'une personne (12) marchant à proximité immédiate du dispositif mobile d'assistance aux soins (1) de sorte que la personne (12) soit soutenue dans son déplacement par le bras de robot (7) lorsqu'elle marche à côté du dispositif mobile d'assistance aux soins (1).

8. Dispositif mobile d'assistance aux soins selon l'une quelconque des revendications 1 à 7, **caractérisé en ce que** le dispositif mobile d'assistance aux soins (1) présente un logement (18) qui est réalisé pour recevoir un conteneur (19) de manière amovible, dans lequel le logement (18) est réalisé de telle sorte qu'en raison de la position locale et de l'emplacement du conteneur (19) dans son état reçu au niveau du logement (18), le bras de robot (7) peut, au moyen d'un préhenseur (21, 21a) manipulé par celui-ci, retirer automatiquement des objets (20) du conteneur (19) et/ou introduire automatiquement des objets (20) depuis l'extérieur dans le conteneur (19).

9. Dispositif mobile d'assistance aux soins selon l'une quelconque des revendications 1 à 8, comprenant un système logistique de transport de patient, présentant :
- un système de planification comprenant un plan de situation d'au moins un bâtiment qui comporte plusieurs stations dont les emplacements locaux sont mémorisés dans le système de planification, et qui sont accessibles par des trajets prédéfinis mémorisés dans le système de planification,
- une base de données de patients dans laquelle sont mémorisées des données personnelles des personnes (12), et
- un système de commande de déroulement qui est réalisé et conçu, sur la base des emplacements locaux des stations, prédéfinis par le système de planification, et des trajets prédéfinis ainsi qu'en fonction des données personnelles provenant de la base de données de patients, pout envoyer des données de navigation à un dispositif de commande de propulsion d'au moins un dispositif mobile d'assistance aux soins (1) selon l'une quelconque des revendications 1 à 8 de sorte que le véhicule autonome (2) respectif dudit au moins un dispositif mobile d'assistance aux soins (1) se déplace automatiquement d'un point de départ à un point de destination sur la base des données de navigation reçues du système de commande de déroulement,
dans lequel, pour former un moyen d'entrée manuel pour la personne (12) à guider au moyen de la commande de robot (10), le bras de robot (7) fonctionne avec un contrôle de la souplesse de sorte que dans le cas d'un déplacement manuel d'un ou de plusieurs membres (8) du bras de robot (7) par la personne (12), un ordre de propulsion peut être transmis à la commande de robot (10) et/ou au dispositif de commande de propulsion (6).
